# EUROPÄISCHE PATENTANMELDUNG

(11) **EP 2 814 005 A2**
(43) Veröffentlichungstag der Anmeldung: **17.12.2014**
(21) Anmeldenummer: 14001671.8
(22) Anmeldetag: 13.05.2014
(51) Int. Cl.: G07C 9/00

(54) **Schlüssel zur Bedienung einer Schließvorrichtung eines Kraftfahrzeugs**

(30) Priorität: 16.05.2013 DE 102013008352
(71) Anmelder: Huf Hülsbeck & Fürst GmbH & Co. KG, 42551 Velbert (DE)
(72) Erfinder: Simon, Jörg, 42489 Wülfrath (DE); Damelang, Steffen, 51674 Wiehl (DE); Uselli, Gianni, 42553 Velbert (DE)
(74) Vertreter: Methling, Frank-Oliver

(57) **Zusammenfassung**

Die vorliegende Erfindung betrifft einen Schlüssel (1) zur Bedienung einer Schließvorrichtung eines Kraftfahrzeugs, welcher ein Gehäuse (2), eine in dem Gehäuse (2) angeordnete Elektronikeinheit (3) und wenigstens einen elektrochemischen Energiespeicher (4) zur Bereitstellung elektrischer Energie aufweist. Die Elektronikeinheit (3) des Schlüssels (1) umfasst Mittel (5) zur kontaktlosen Betätigung der Schließvorrichtung eines Kraftfahrzeugs über eine Luftschnittstelle unter Nutzung bereitgestellter elektrischer Energie und ein nach wenigstens einem NFC-Standard arbeitendes Kommunikationsmittel (6) mit einer Antenne (7), wobei die Antenne (7) derart ausgebildet ist, dass in einem elektromagnetischen Feld einer NFC-Sendeeinrichtung in der Antenne (7) ein Strom erzeugt wird, wobei die Elektronikeinheit (3) ausgebildet ist, den in der Antenne (7) in dem elektromagnetischen Feld erzeugten Strom zur kontaktlosen Betätigung einer Schließvorrichtung eines Kraftfahrzeugs über eine Luftschnittstelle zu nutzen.

## Beschreibung

Die Erfindung betrifft einen Schlüssel zur Bedienung einer Schließvorrichtung eines Kraftfahrzeugs, welcher ein Gehäuse, eine in dem Gehäuse angeordnete Elektronikeinheit und wenigstens einen elektrochemischen Energiespeicher zur Bereitstellung elektrischer Energie aufweist, wobei die Elektronikeinheit Mittel zur kontaktlosen Betätigung der Schließvorrichtung über eine Luftschnittstelle unter Nutzung bereitgestellter elektrischer Energie und ein nach wenigstens einem NFC-Standard arbeitendes Kommunikationsmittel mit einer Antenne umfasst, wobei die Antenne derart ausgebildet ist, dass in einem elektromagnetischen Feld einer NFC-Sendeeinrichtung in der Antenne ein Strom erzeugt wird.

Schlüssel zur Bedienung einer Schließvorrichtung eines Kraftfahrzeugs, welche ein Gehäuse, eine in dem Gehäuse angeordnete Elektronikeinheit und wenigstens einen elektrochemischen Energiespeicher zur Bereitstellung elektrischer Energie aufweisen, wobei die Elektronikeinheit Mittel zur kontaktlosen Betätigung einer Schließvorrichtung eines Kraftfahrzeugs über eine Luftschnittstelle unter Nutzung bereitgestellter elektrischer Energie umfasst, sind im Stand der Technik bekannt und als Autoschlüssel moderner Kraftfahrzeuge weit verbreitet. Üblicherweise weist ein solcher Schlüssel wenigstens ein Bedienelement auf, durch dessen Betätigung die Schließvorrichtung eines Kraftfahrzeugs bedienbar ist. Die Elektronikeinheit des Schlüssels weist dabei insbesondere eine Sendeeinrichtung als Mittel zur kontaktlosen Betätigung einer Schließvorrichtung eines Kraftfahrzeugs über eine Luftschnittstelle unter Nutzung bereitgestellter elektrischer Energie auf. Insbesondere kann die Sendeeinrichtung als Infrarot- oder Funkfernbedienung ausgebildet sein. Bei Betätigung eines Bedienelementes des Schlüssels wird dabei ein Signal an eine Empfangseinrichtung der Schließvorrichtung des Kraftfahrzeugs gesendet, woraufhin in Abhängigkeit von dem empfangenen Signal des Schlüssels eine Aktion ausgelöst wird. Mittels des Schlüssels auslösbare Aktion sind dabei unter anderem insbesondere ein Ver- und Entriegeln des Kraftfahrzeugs, ein Öffnen und/oder Schließen der Kofferraumklappe und/oder ein Öffnen und Schließen der Fenster des Kraftfahrzeugs. Die Energie zum Senden eines Signals mittels des Schlüssels an eine Empfangseinrichtung einer Schließvorrichtung eines Kraftfahrzeugs wird dabei üblicherweise von einer Batterie bereitgestellt, welche austauschbar in das Gehäuse des Schlüssels eingesetzt ist. Eine solche Batterie muss üblicherweise nach einem bestimmten Zeitraum, beispielsweise nach drei Jahren, getauscht werden.

Aus der Druckschrift DE 10 2008 026 676 A1 ist darüber hinaus ein Schlüssel zur Bedienung einer Schließvorrichtung eines Kraftfahrzeugs bekannt, welcher ein Kommunikationsmittel zur Übermittlung von Fahrzeugdaten an ein externes Datengerät aufweist. Dabei ist insbesondere vorgesehen, dass die Übertragung gemäß einem NFC-Standard (NFC: Near Field Communication) arbeiten kann. Für eine solche Übertragung von Daten mittels NFC wird ein in einer Antenne des Kommunikationsmittels in einem elektromagnetischen Feld einer NFC-Sendeeinrichtung erzeugter Strom genutzt. Unter Nutzung des Kommunikationsmittels des Schlüssels soll insbesondere eine Überwachung von wesentlichen Fahrzeugdaten ermöglicht werden.

Nachteilig bei Schlüsseln, welche eine kontaktlose Betätigung einer Schließvorrichtung eines Kraftfahrzeugs ermöglichen, ist, dass bei einem versäumten Austauschen der Batterie die Gefahr besteht, dass die Funktionalität des Schlüssels nicht mehr oder aber nur noch eingeschränkt gegeben ist, was letztlich dazu führen kann, dass die Schließvorrichtung auf eine Betätigung des entsprechenden Bedienelementes nicht reagiert.

Der Grund hierfür ist, dass die Leistungsfähigkeit des Energiespeichers des Schlüssels mit der Zeit nachlässt und somit nicht mehr ausreichend elektrische Energie zur Generierung und insbesondere zum Senden eines Signals mittels des Schlüssels an eine Empfangseinrichtung des Kraftfahrzeugs zur Betätigung der Schließvorrichtung bereitgestellt werden kann. In einem solchen Fall besteht zwar üblicherweise noch die Möglichkeit die Schließvorrichtung eines Kraftfahrzeugs mechanisch zu bedienen. Dabei ist der Umfang der Bedienung allerdings eingeschränkt. Beispielsweise ist in der Regel die Zentralverriegelung eines Kraftfahrzeugs nicht mechanisch sondern nur durch kontaktlose Betätigung mittels des Schlüssels nutzbar. Darüber hinaus besteht das Problem, dass die Wegfahrsperre eines Kraftfahrzeugs auf mechanischem Wege üblicherweise nicht deaktivierbar ist.

Vor diesem Hintergrund ist es eine Aufgabe der vorliegenden Erfindung einen eingangs genannten Schlüssel zu verbessern, insbesondere dahingehend, dass auf besonders einfache Art und Weise dem Schlüssel elektrische Energie zur kontaktlosen Betätigung einer Schließvorrichtung eines Kraftfahrzeugs über eine Luftschnittstelle zugeführt werden kann, vorteilhafterweise unter Nutzung bestehender technischer Mittel, und somit zumindest eine Notenergieversorgung bereitgestellt wird.

Diese Aufgabe wird erfindungsgemäß durch einen Schlüssel gemäß Anspruch 1 gelöst. Vorteilhafte Weiterbildungen der Erfindung sind in den Unteransprüchen angegeben.

Zur Lösung der Aufgabe wird ein Schlüssel zur Bedienung einer Schließvorrichtung eines Kraftfahrzeugs, welcher ein Gehäuse, eine in dem Gehäuse angeordnete Elektronikeinheit und wenigstens einen elektrochemischen Energiespeicher zur Bereitstellung elektrischer Energie aufweist, vorgeschlagen, wobei die Elektronikeinheit Mittel zur kontaktlosen Betätigung der Schließvorrichtung über eine Luftschnittstelle unter Nutzung bereitgestellter elektrischer Energie und ein nach wenigstens einem NFC-Standard arbeitendes Kommunikationsmittel mit einer Antenne umfasst, wobei die Antenne derart ausgebildet ist, dass in einem elektromagnetischen Feld einer NFC-Sendeeinrichtung in der Antenne ein Strom erzeugt wird, wobei die Elektronikeinheit ausgebildet ist, den in der Antenne in dem elektromagnetischen Feld erzeugten Strom zur kontaktlosen Betätigung der Schließvorrichtung als bereitgestellte elektrische Energie zu nutzen. Als Antenne wird dabei vorteilhafterweise eine Spule eingesetzt, welche vorzugsweise aus einem Kupferdraht gewickelt ist.

Erfindungsgemäß erfolgt durch ein Einbringen und Halten des Schlüssels in ein elektromagnetisches Feld einer NFC-Sendeeinrichtung unter Nutzung der Antenne des Schlüssels eine induktive Kopplung. Energie wird dabei induktiv von der NFC-Sendeeinrichtung als magnetisches Wechselfeld übertragen, wobei in der als Spule beziehungsweise nach Art einer Spule ausgebildeten Antenne eine Spannung induziert wird, und somit In der Antenne ein Strom erzeugt wird. Die Elektronikeinheit des Schlüssels ist dabei vorteilhafterweise derart ausgebildet, dass dieser Strom als bereitgestellte Energie zur kontaktlosen Betätigung einer Schließvorrichtung eines Kraftfahrzeugs über eine Luftschnittstelle nutzbar ist. Hierzu weist die Elektronikeinheit vorteilhafterweise Mittel auf, welche den erzeugten Strom anpassen, insbesondere durch ein Gleichrichten und Begrenzen auf einen vorbestimmten Wert. Ein Nutzen des erzeugten Stroms zur kontaktlosen Betätigung der Schließvorrichtung als bereitgestellte elektrische Energie sieht dabei insbesondere vor, dass der angepasste Strom direkt dem Mittel zur kontaktlosen Betätigung der Schließvorrichtung über eine Luftschnitkstelle als elektrische Energie bereitgestellt wird. Vorteilhafterweise ist damit insbesondere auch dann, wenn der elektrochemischen Energiespeicher leer ist, und dieser somit keine elektrische Energie bereitstelle kann, unter Nutzung der Feldenergie einer NFC-Sendeeinrichtung eine Bedienung einer Schließvorrichtung eines Kraftfahrzeugs ermöglicht. Ein Nutzen des erzeugten Stroms zur kontaktlosen Betätigung der Schließvorrichtung als bereitgestellte elektrische Energie sieht darüber hinaus als vorteilhafte Ausgestaltungsvariante der Erfindung zudem vor, dass der erzeugte Strom, vorzugsweise nach einer entsprechenden Anpassung, zum Laden eines Energiespeichers genutzt wird, wobei die Energie des geladenen Energiespeichers zur Bedienung einer Schließvorrichtung eines Kraftfahrzeugs genutzt wird.

Darüber hinaus besteht vorteilhafterweise weiterhin die Möglichkeit, die Antenne in Verbindung mit dem Kommunikationsmittel der Elektronikeinheit des Schlüssels zur Kommunikation mit einer NFC-Sende-/Empfangseinrichtung zu nutzen. Das elektromagnetische Feld einer NFC-Sendeeinrichtung, in welches der Schlüssel zur Nutzung der seitens der NFC-Sendeeinrichtung bereitgestellten Energie eingebracht wird, ist dabei insbesondere das von der NFC-Sendeeinrichtung erzeugte Nahfeld, das heißt, dass die Distanz zwischen der NFC-Sendeeinrichtung und dem Schlüssel vorzugsweise weniger als zehn Zentimeter beträgt, damit der Schlüssel die Energie des elektromagnetischen Feldes nutzen kann. Die Antenne des Kommunikationsmittels der Elektronikeinheit des Schlüssels kann insbesondere auch als planare Spule, beispielsweise als gedruckte Schaltung, ausgebildet sein. Die Antenne ist zudem vorteilhafterweise auf Frequenzen einer nach einem NFC-Standard sendenden NFC-Sendeeinrichtung abgestimmt, insbesondere auf Frequenzen in einem Frequenzbereich um 13,56 MHz (MHz: Megahertz).

Ein elektrochemischer Energiespeicher im Sinne der vorliegenden Erfindung ist insbesondere eine Batterie, also ein nicht-nachladbarer Energiespeicher, oder ein Akkumulator, also ein nachladbarer Energiespeicher.

Der Erfindung liegt die Erkenntnis zugrunde, dass bei einer Weiterentwicklung der Elektronikeinheit eines Schlüssels zur Bedienung einer Schließvorrichtung eines Kraftfahrzeugs unter Nutzung der Antenne eines nach wenigstens einem NFC-Standard arbeitenden Kommunikationsmittels des Schlüssels nicht nur ein Übertragen von Daten ermöglicht ist, sondern durch die transformatorische Kopplung der Antenne des Kommunikationsmittels des Schlüssels mit der Spule einer NFC-Sendeeinrichtung ein in der Antenne induzierter Strom als Energie zur kontaktlosen Betätigung einer Schließvorrichtung eines Kraftfahrzeugs über eine Luftschnittstelle mittels des Schlüssels nutzbar gemacht werden kann. Die Nutzbarmachung des in der Antenne induzierten Stroms kann insbesondere eine Gleichrichtung des Stroms und eine Anpassung an einen konstanten Wert umfassen. Die Nutzbarmachung des in der Antenne induzierten Stroms erfolgt insbesondere derart, dass der noch in dem elektromagnetischen Feld der NFC-Sendeeinrichtung befindliche Schlüssel zur Bedienung einer Schließvorrichtung eines Kraftfahrzeugs genutzt werden kann, und zwar auch dann, wenn der elektrochemischen Energiespeicher des Schlüssels leer ist. Ferner erfolgt eine Nutzbarmachung gemäß einer vorteilhaften Ausgestaltungsvariante der Erfindung derart, dass der in der Antenne erzeugte Strom zum Laden eines Energiespeichers des Schlüssels, also zum induktiven Laden, genutzt werden kann. Vorteilhafterweise ist für dieses induktive Laden zu der Antenne des Schlüssels keine zusätzliche Spule als Sekundärspule erforderlich.

Gemäß einer bevorzugten Ausgestaltung der Erfindung ist dabei vorgesehen, dass die Elektronikeinheit eine Ladeeinheit umfasst, wobei die Antenne elektrisch leitfähig mit der Ladeeinheit verbunden ist und die Antenne in Verbindung mit der Ladeeinheit in einem elektromagnetischen Feld einer NFC-Sendeeinrichtung Energie des elektromagnetischen Feldes in einen Ladestrom umwandelt. Der in der Antenne in dem elektromagnetischen Feld erzeugte Strom wird dabei vorteilhafterweise als Ladestrom einem elektrischen Energiespeicher zugeführt, welcher die zugeführte elektrische Energie speichert und dem Schlüssel, insbesondere dem Mittel zur kontaktlosen Betätigung der Schließvorrichtung über eine Luftschnittstelle als elektrische Energie bereitstellt.

Vorteilhafterweise ist die Antenne über wenigstens ein Schaltelement mit der Ladeeinheit elektrisch leitfähig verbunden. Das Schaltelement kann dabei insbesondere mittels wenigstens eines Bedienelementes des Schlüssels und/oder gesteuert von der wenigstens einen Ladeeinheit betätigt werden, insbesondere um einen Ladevorgang zu stoppen und/oder um zwischen einer Übertragung elektrischer Energie zwischen dem Schlüssel und einer NFC-Sende-/Empfangseinrichtung zum Zwecke einer Bereitstellung elektrischer Energie zur kontaktlosen Betätigung einer Schließvorrichtung eines Kraftfahrzeugs und einer Übertragung elektrischer Energie zwischen dem Schlüssel und einer NFC-Sende-/Empfangseinrichtung zum Zwecke einer Datenübertragung zwischen dem Schlüssel und der NFC-Sende-/Empfangseinrichtung unter Nutzung des Kommunikationsmittels des Schlüssels umzuschalten.

Gemäß einer weiteren bevorzugten Ausgestaltung der Erfindung ist die Ladeeinheit elektrisch leitfähig mit wenigstens einem Energiespeicher verbunden, wobei der Energiespeicher vorteilhafterweise ausgebildet ist, den in der Antenne erzeugten Strom zu speichern, und wobei die Elektronikeinheit des Schlüssels vorteilhafterweise ausgebildet ist, die gespeicherte Energie zur kontaktlosen Betätigung einer Schließvorrichtung eines Kraftfahrzeugs über eine Luftschnittstelle zu nutzen. Vor der Speicherung des Stroms in dem Energiespeicher ist insbesondere eine Anpassung des Stroms vorgesehen, vorzugsweise eine Anpassung an einen konstanten Wert und/oder eine Gleichrichtung des Stroms.

Der Energiespeicher kann insbesondere ein Kondensator oder eine Spule sein. In einer derartigen Ausgestaltung ist das Element zur Speicherung elektrischer Energie vorteilhafterweise eine alternative Energiequelle zu dem elektrochemischen Energiespeicher des Schlüssels. Kann der elektrochemische Energiespeicher keine ausreichende Energie zur Bedienung einer Schließvorrichtung eines Kraftfahrzeugs bereitstellen, kann vorteilhafterweise von dem Element zur Speicherung elektrischer Energie gespeicherte Energie zur Betätigung einer Schließvorrichtung eines Kraftfahrzeugs genutzt werden.

Der Energiespeicher, insbesondere eine hierfür vorgesehene Spule beziehungsweise ein hierfür vorgesehener Kondensator, ist dabei vorteilhafterweise derart dimensioniert, dass Energie für mehrere Bedienvorgänge einer Schließvorrichtung eines Kraftfahrzeugs, wenigstens aber für einen Bedienvorgang, unter Nutzung des Mittels zur kontaktlosen Betätigung der Schließvorrichtung eines Kraftfahrzeugs über eine Luftschnittstelle bereitgestellt wird. Ein Kondensator oder eine Spule als Element zur Speicherung elektrischer Energie stellt dabei vorteilhafterweise eine Art Notenergieversorgung nach dem Einbringen des Schlüssels in ein elektromagnetisches Nahfeld einer NFC-Sendeeinrichtung bereit, die es dem Nutzer des Schlüssels vorteilhafterweise ermöglicht, unter Nutzung des Mittels zur kontaktlosen Betätigung einer Schließvorrichtung eines Kraftfahrzeugs über eine Luftschniftstelle eine Schließvorrichtung eines Kraftfahrzeugs zu betätigen und somit zumindest Zugang zu dem Kraftfahrzeug zu erlangen. Durch die erfindungsgemäße Bereitstellung elektrischer Energie zumindest als Notenergieversorgung durch Einbringen und Halten des Schlüssels in ein elektromagnetisches Nahfeld einer NFC-Sendeeinrichtung, beispielsweise in das elektromagnetische Nahfeld eines NFC-fähigen Smartphones, kann vorteilhafterweise von der Bereitstellung eines mechanischen Schlüssels, also eines Schlüssels, welcher, insbesondere mit einem Schlüsselbart, in ein Schloss eines Kraftfahrzeugs zum Ver- oder Entriegeln des Kraftfahrzeugs eingebracht wird, abgesehen werden. Ein Schließsystem eines Kraftfahrzeugs umfassend eine Schließvorrichtung des Kraftfahrzeugs und einen Schlüssel zur kontaktlosen Betätigung der Schließvorrichtung kann hierdurch vorteilhafterweise konstruktiv vereinfacht werden, da mechanische Schlösser als Notzugang nicht erforderlich sind. Das erfindungsgemäße induktive Laden des Energiespeichers unter Nutzung der Antenne des nach wenigstens einem NFC-Standard arbeitenden Kommunikationsmittels des Schlüssels als Hauptspule des zu ladenden Schlüssels benötigt dabei vorteilhafterweise kein spezielles zusätzliches Ladegerät zur Erzeugung eines elektromagnetischen Feldes, sondern es kann das elektromagnetische Feld einer NFC-Sendeeinrichtung genutzt werden, vorzugsweise ein von einem NFC-fähigen Mobilfunktelefon erzeugtes elektromagnetisches Feld. Da solche NFC-fähigen Mobilfunktelefone immer stärker verbreitet sind, wird ein Nutzer eines erfindungsgemäßen Schlüssels in der Regel insbesondere Zugriff auf ein solches NFC-fähiges Mobilfunktelefon als NFC-Sendeeinrichtung und somit quasi als Ladegerät für den erfindungsgemäßen Schlüssel haben.

Gemäß einer vorteilhaften Ausgestaltungsvariante der Erfindung ist vorgesehen, dass der Energiespeicher der wenigstens eine elektrochemische Energiespeicher des Schlüssels ist, wobei der wenigstens eine elektrochemische Energiespeicher ein Akkumulator ist. Vorteilhafterweise ist keine zusätzliche Spule zu der als Antenne ausgebildeten Spule des nach wenigstens einem NFC-Standard arbeitenden Kommunikationsmittels erforderlich, um den Akkumulator induktiv laden zu können. Der Akkumulator wird dabei vorteilhafterweise jedes Mal geladen, wenn der Schlüssel in das elektromagnetische Nahfeld einer NFC-Sendeeinrichtung eingebracht wird und dabei Energie von der NFC-Sendeeinrichtung zu der Antenne des Schlüssels transferiert wird. Somit ist vorteilhafterweise keine zusätzliche Ladevorrichtung zum Laden des Akkumulators erforderlich, da eine NFC-Sendeeinrichtung, insbesondere ein NFC-fähiges Smartphone, zum induktiven Laden des Akkumulators nutzbar ist. Die Energie eines von der NFC-Sendeeinrichtung erzeugten elektromagnetischen Feldes, insbesondere eines bei einer Frequenz innerhalb eines Frequenzbereiches um 13,56 MHz (MHz: Megahertz) erzeugten elektromagnetischen Feldes, wandelt die nach Art einer Spule ausgebildete Antenne des Schlüssels unter Nutzung der Ladeeinheit des Schlüssels in einen Strom um, welcher zum Nachladen des Akkumulators genutzt wird. Vorteilhafterweise muss ein als Akkumulator ausgebildeter elektrochemischer Energiespeicher, welcher durch ein erfindungsgemäßes induktives Laden nachladbar ist, nicht ausgetauscht werden, sodass das Gehäuse des Schlüssels dicht gegen das Eindringen von Feuchtigkeit ausgebildet werden kann. Eine weitere bevorzugte Weiterbildung der vorgenannten Ausgestaltung der Erfindung sieht daher vor, dass das Gehäuse des Schlüssels dicht gegen das Eindringen von Feuchtigkeit ausgebildet ist, vorzugsweise in dem das Gehäuse einteilig ausgebildet ist, insbesondere mittels eines Spritzgussverfahrens.

Vorteilhafterweise ist die Ladeeinheit des Schlüssels ausgebildet, den Ladevorgang des Energiespeichers, insbesondere des als Akkumulator ausgebildeten elektrochemischen Energiespeichers des Schlüssels, zu steuern. Insbesondere ist die Ladeeinheit ausgebildet, den Ladevorgang des als Akkumulator ausgebildeten elektrochemischen Energiespeichers des Schlüssels in Abhängigkeit von der Ladekapazität des Akkumulators zu steuern. Vorteilhafterweise kann die Ladeeinheit durch Ansteuerung wenigstens eines Schaltelementes den Ladevorgang bei vollständig geladenem Akkumulator stoppen. Das mittels der Ladeeinheit ansteuerbare Schaltelement kann insbesondere das gemäß einer vorteilhaften Ausgestaltung der Erfindung zwischen Antenne und Ladeeinheit angeordnete Schaltelement sein.

Eine weitere vorteilhafte Ausgestaltung der Erfindung sieht vor, dass der Schlüssel wenigstens eine Signalisierungseinrichtung aufweist. Die wenigstens eine Signalisierungseinrichtung signalisiert dabei vorteilhafterweise, wenn der Schlüssel derart in einem elektromagnetischen Feld ausgerichtet ist, dass eine optimale Nutzung der durch das elektromagnetische Feld bereitgestellten Energie durch die Antenne des Schlüssels ermöglicht ist. Die Signalisierungseinrichtung dient somit vorteilhafterweise der Verbesserung der Ausrichtung der Antenne in einem elektromagnetischen Feld einer NFC-Sendeeinrichtung. Insbesondere ist vorgesehen, dass unter Nutzung der Elektronikeinheit des Schlüssels eine Änderung eines in der Antenne induzierten Stroms in Abhängigkeit der Ausrichtung der Antenne in dem elektromagnetischen Feld erfasst wird, wobei die Signalisierungseinrichtung vorteilhafterweise signalisiert, wenn ein maximaler Strom in der Antenne induziert wird. Insbesondere kann die Signalisierungseinrichtung wenigstens eine Leuchtdiode (LED; LED: light-emitting diode) umfassen, wobei insbesondere durch die Intensität des Aufleuchtens der LED zumindest kurzzeitig signalisierbar ist, wenn die Ausrichtung der Antenne in dem elektromagnetischen Feld optimal ist. Alternativ kann insbesondere durch verschiedenfarbige LEDs eine optimale Ausrichtung signalisiert werden, wobei eine optimale Ausrichtung vorzugsweise durch eine grün leuchtende LED signalisiert wird.

Gemäß einer weiteren vorteilhaften Ausgestaltung der Erfindung ist vorgesehen, dass der Schlüssel wenigstens eine Signalisierungseinrichtung aufweist, wobei die wenigstens eine Signalisierungseinrichtung signalisiert, wenn in einen Strom umgewandelte Energie zur zumindest einmaligen Betätigung einer Schließvorrichtung eines Kraftfahrzeugs nutzbar ist. Vorteilhafterweise wird hierdurch die Bedienung für den Nutzer weiter vereinfacht. Insbesondere ist vorgesehen, dass ein Aufblinken einer LED signalisiert, wenn in einen Strom umgewandelte Energie zur zumindest einmaligen Betätigung einer Schließvorrichtung eines Kraftfahrzeugs nutzbar ist. Die Signalisierungseinrichtung wird dabei vorzugsweise durch die Ladeeinheit gesteuert.

Mit der vorliegenden Erfindung wird des Weiteren ein mobiles Endgerät, insbesondere ein in einem Mobilfunknetz betreibbares Mobilfunktelefon, vorzugsweise ein Smartphone, umfassend eine NFC-Sendeeinrichtung vorgeschlagen, wobei das mobile Endgerät ausgebildet ist, das Einbringen eines erfindungsgemäßen Schlüssels in ein von der NFC-Sendeeinrichtung erzeugtes elektromagnetisches Feld zu erkennen und wenigstens eine Information im Zusammenhang mit unter Nutzung der Antenne des Schlüssels umgewandelter Energie des elektromagnetischen Feldes bereitzustellen. Informationen im Zusammenhang mit unter Nutzung der Antenne des Schlüssels umgewandelter Energie können insbesondere die Ausrichtung der Antenne in dem elektromagnetischen Feld betreffen. So ist insbesondere vorgesehen, dass auf einem Display des mobilen Endgerätes signalisiert wird, ob der Schlüssel relativ zu dem mobilen Endgerät anders ausgerichtet werden soll. Darüber hinaus kann als weitere Information und/oder als alternative Information auf einem Display des mobilen Endgerätes signalisiert werden, ob die an den Schlüssel übertragene Energie zur zumindest einmaligen Betätigung einer Schließvorrichtung eines Kraftfahrzeugs ausreicht. Vorzugsweise ist als Information der Ladezustand des als Akkumulator ausgebildeten elektrochemischen Energiespeichers des Schlüssels zumindest näherungsweise auf einem Display des mobilen Endgerätes darstellbar. Die Wiedergabe von Informationen kann dabei insbesondere unter Nutzung eines seitens des mobilen Endgerätes bereitgestellten prädiktiven Algorithmus erfolgen. Darüber hinaus ist als vorteilhafte Ausgestaltung der Erfindung vorgesehen, dass seitens der den Ladevorgang steuernden Ladeeinheit des Schlüssels eine Information hinsichtlich des Ladezustands des als Akkumulator ausgebildeten elektrochemischen Energiespeichers des Schlüssels bereitgestellt wird, welche unter Nutzung des Kommunikationsmittels des Schlüssels an das mobile Endgerät übertragen wird. Vorzugsweise wird die Information in vordefinierten zeitlichen Abständen durch die Ladeeinheit bereitgestellt, vorteilhafterweise im Sekundentakt.

Weitere vorteilhafte Einzelheiten, Merkmale und Ausgestaltungsdetails der Erfindung werden im Zusammenhang mit den in den Figuren dargestellten Ausführungsbeispielen näher erläutert. Dabei zeigt:
- Fig. 1: in einer schematischen Darstellung eine Draufsicht eines Ausführungsbeispiels für einen erfindungsgemäßen Schlüssel mit geöffnetem Gehäuse; und
- Fig. 2: in einer schematischen Darstellung ein weiteres Ausführungsbeispiel für einen erfindungsgemäßen Schlüssel, welcher in ein elektromagnetisches Feld einer NFC-Sendeeinrichtung eingebracht ist.

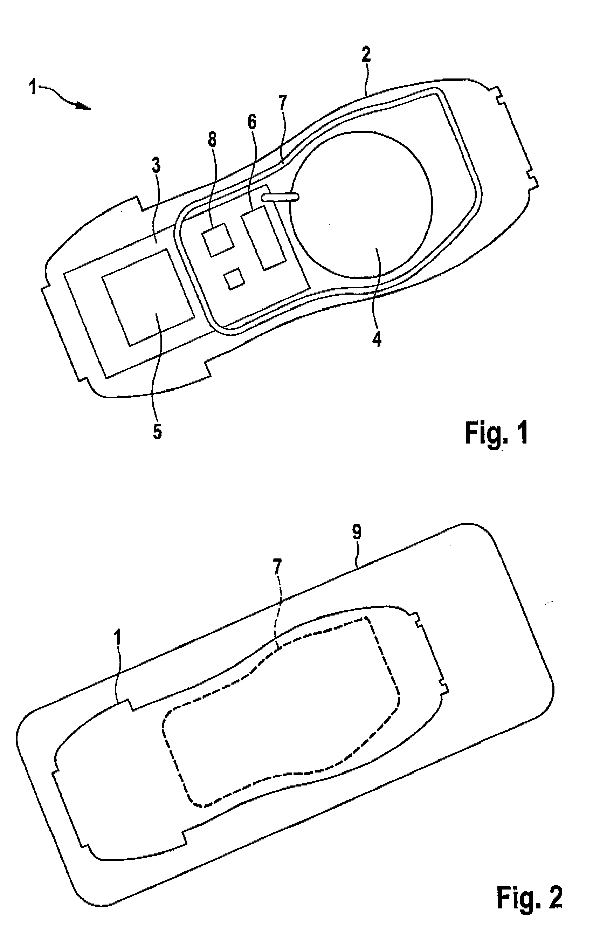

In Fig. 1 ist ein Schlüssel 1 zur Bedienung einer Schließvorrichtung eines Kraftfahrzeugs mit einem geöffneten Gehäuse 2 in einer Draufsicht dargestellt. Das Gehäuse 2 des Schlüssels 1 ist in dem dargestellten Ausführungsbeispiel aus Kunststoff. Insbesondere ist vorgesehen, dass das Gehäuse 2 eines solchen Schlüssels 1 dicht gegen Feuchtigkeit ausgebildet ist, sodass ein Eindringen von Feuchtigkeit in das Gehäuse 2 verhindert wird. In dem Gehäuse 2 des Schlüssels 1 ist eine Elektronikeinheit 3 angeordnet. Ferner ist in dem Gehäuse 2 ein Akkumulator 4 als elektrochemische Energiespeicher angeordnet, welcher die von der Elektronikeinheit 3 benötigte elektrische Energie bereitstellt.

Die Elektronikeinheit 3 des Schlüssels 1 umfasst Mittel 5 zur kontaktlosen Betätigung einer Schließvorrichtung eines Kraftfahrzeugs über eine Luftschnittstelle. Das Mittel 5 zur kontaktlosen Betätigung einer Schließvorrichtung eines Kraftfahrzeugs umfasst dabei insbesondere eine Sendeeinrichtung, welche in dem Ausführungsbeispiel ausgebildet ist, ein Funksignal an eine Empfangseinrichtung eines Kraftfahrzeugs zu senden, wobei in Abhängigkeit von dem gesendeten Signal insbesondere eine Betätigung einer Schließvorrichtung eines Kraftfahrzeugs, wie ein Verriegeln und/oder ein Entriegeln eines Kraftfahrzeugs erfolgt.

Zur Bedienung einer Schließvorrichtung eines Kraftfahrzeugs mittels des Schlüssels 1 weist der Schlüssel 1 in dem dargestellten Ausführungsbeispiel mehrerer Betätigungselemente (in Fig. 1 nicht explizit dargestellt) auf. Die Betätigungselemente können beispielsweise als Drucktaster ausgebildet sein.

Ein Betätigungselement ist dabei jeweils mit wenigstens einer Funktion verknüpft. Beim Betätigen des Betätigungselementes wird die mit dem Betätigungselement verknüpfte Funktion durch Senden eines entsprechenden Signals unter Nutzung der Mittel 5 zur kontaktlosen Betätigung einer Schließvorrichtung eines Kraftfahrzeugs und Empfang des gesendeten Signals von einer Empfangseinrichtung eines Kraftfahrzeugs seitens der Schließvorrichtung dieses Kraftfahrzeugs ausgeführt. Der Akkumulator 4 stellt dabei die von der Elektronikeinheit 3 und dem Mittel 5 zur kontaktlosen Betätigung einer Schließvorrichtung eines Kraftfahrzeugs zum Senden eines Signals benötigte Energie bereit.

Neben den Mitteln 5 zur kontaktlosen Betätigung einer Schließvorrichtung eines Kraftfahrzeugs umfasst die Elektronikeinheit 3 des Schlüssels 1 insbesondere ein nach wenigstens einem NFC-Standard arbeitendes Kommunikationsmittel 6. Das Kommunikationsmittel 6 umfasst dabei eine nach Art einer Spule unter Nutzung eines dünnen Kupferdrahts gewickelte Antenne 7. Die Antenne 7 ist ausgebildet, in einem elektromagnetischen Feld einer NFC-Sendeeinrichtung, beispielsweise in einem von einem Mobilfunktelefon mit einer NFC-Sendeeinrichtung erzeugten elektromagnetischen Feld Energie des elektromagnetischen Feldes durch Induktion in einen Strom umzuwandeln. Die Antenne 7 ist dabei auf solche Frequenzen abgestimmt, welche einem NFC-Standard entsprechen, insbesondere auf Frequenzen in einem Frequenzband um 13,56 MHz. Insbesondere ist das Kommunikationsmittel 6 mit der Antenne 7 zum kontaktlosen Austausch von Daten mit einer NFC-Sende-/Empfangseinrichtung ausgebildet, wobei insbesondere ein Austausch von Daten, wie bei einer solchen Nahfeldkommunikation üblich, über Distanzen von bis zu 10 cm bei einer maximalen Datenübertragungsrate von 424 kBit/s, vorgesehen ist.

Die Antenne 7 des Kommunikationsmittels 6 ist darüber hinaus in Verbindung mit einer Ladeeinheit 8 der Elektronikeinheit 3 ausgebildet, Energie eines elektromagnetischen Feldes in einen Ladestrom zum Laden des Akkumulators 4 umzuwandeln. Hierzu ist die Antenne 7 elektrisch leitfähig mit der Ladeeinheit 8 verbunden. Wird der Schlüssel 1 in das von einer NFC-Sende-/Empfangseinrichtung generierte elektromagnetische Nahfeld eingebracht, beispielsweise indem der Schlüssel 1 auf ein NFC-fähiges Mobilfunktelefon gelegt wird, erfolgt eine transformatorische Kupplung der das elektromagnetische Feld generierenden Spule (Primärspule) einer NFC-Sende-Empfangseinrichtung und der als Spule (Sekundärspule) agierenden Antenne 7 des Schlüssels 1. Ein direkter Kontakt zwischen der Spule einer NFC-Sende-/Empfangseinrichtung und der Antenne 7 des Schlüssels 1 besteht dabei nicht. Zwischen dem Schlüssel 1 bzw. der Antenne 7 und einer NFC-Sende-/Empfangseinrichtung wird Energie vorteilhafterweise induktiv als magnetisches Wechselfeld übertragen. Die Elektronikeinheit 3 des Schlüssels 1 ist dabei ausgebildet, die seitens der Antenne 7 in Verbindung mit der Ladeeinheit 8 in einen Ladestrom umgewandelte und dem Akkumulator 8 zugeführte Energie zur kontaktlosen Betätigung einer Schließvorrichtung eines Kraftfahrzeugs über eine Luftschnittstelle zu nutzen. Jedes Mal, wenn der Schlüssel 1 in ein elektromagnetisches Feld einer NFC-Sende-/Empfangseinrichtung eingebracht wird, insbesondere zum Übertragen von Daten, startet vorteilhafterweise auch ein Ladevorgang des Akkumulators 4 durch Generierung eines Ladestroms unter Nutzung der Energie des von der NFC-Sende-/Empfangseinrichtung generierten elektromagnetischen Feldes.

Die Ladeeinheit 8 der Elektronikeinheit 3 des Schlüssels 1 ist dabei zur Steuerung des Ladevorgangs des Akkumulators 4 ausgebildet. Vorteilhafterweise überwacht die Ladeeinheit 8 den Ladezustand des Akkumulators 4. Insbesondere passt die Ladeeinheit 8 den in der Antenne 7 induzierten Strom derart an, dass dieser als Ladestrom dem Akkumulator 4 zugeführt werden kann. Dabei ist die Ladeeinheit 8 elektrisch leitfähig mit dem Akkumulator 4 verbunden, wobei der Akkumulator 4 ausgebildet ist, die in einen Ladestrom umgewandelte Energie zu speichern, sodass die Elektronikeinheit 3 die von dem Akkumulator 4 gespeicherte elektrische Energie nutzen kann, insbesondere für das Generieren und Senden eines Funksignals zur kontaktlosen Betätigung einer Schließvorrichtung eines Kraftfahrzeugs über eine Luftschnittstelle. Die Elektronikeinheit 3 weist vorteilhafterweise ferner einen Controller-Chip (in Fig. 1 nicht explizit dargestellt) auf, welcher die NFC-Kommunikation und die Initiierung eines Ladevorgangs des Akkumulators 4 im elektromagnetischen Nahfeld einer NFC-Sende-Empfangseinrichtung steuert. Hierzu aktiviert/deaktiviert der Controller-Chip vorzugsweise die Ladeeinheit 8, welche bei initiierung eines Ladevorgang den Ladevorgang steuert.

In einer nicht dargestellten Ausführungsvariante des Schlüssels 1 weist der Schlüssel 1 drei Leuchtdioden (LEDs) als Signalisierungseinrichtung auf. Unter Nutzung dieser Signalisierungseinrichtung wird einem Nutzer signalisiert, wenn der Schlüssel 1 derart in einem elektromagnetischen Feld ausgerichtet ist, dass eine optimale Nutzung der durch das elektromagnetische Feld bereitgestellten Energie durch die Antenne 7 ermöglicht ist, da die Wirkung der induktiven Kopplung der Sendespule einer NFC-Sendeeinrichtung und der als Empfangsspule fungierenden Antenne 7 des Schlüssels 1 durch die relative Positionierung der Empfangsspule zur Sendespule beeinflusst wird. Hierzu erfasst die Elektronikeinheit 3 des Schlüssels 1 Änderungen des in der Antenne 7 induzierten Stromes, wobei das Aufleuchten einer LED signalisiert, dass ein Strom induziert wird, dass Aufleuchten von zwei LEDs signalisiert, dass ein höherer Strom induziert wird und das Aufleuchten von drei LEDs signalisiert, dass ein Strom induziert wird, welcher einen optimalen Ladevorgang des Akkumulators 4 ermöglicht.

Durch ein blinkendes Aufleuchten aller drei LEDs des Schlüssels 1 wird dem Nutzer vorteilhafterweise signalisiert, wenn von der Antenne 7 in Verbindung mit der Ladeeinheit 8 in einen Ladestrom umgewandelte Energie zur zumindest einmaligen Betätigung einer Schließvorrichtung eines Kraftfahrzeugs nutzbar ist. Dies ist insbesondere dann relevant, wenn der Akkumulator 4 zuvor entladen war, sodass eine kontaktlose Betätigung einer Schließvorrichtung eines Kraftfahrzeugs mittels des Schlüssels 1 nicht ermöglicht war. Auf diese Art und Weise ist quasi eine Notenergieversorgung bereitgestellt.

In Fig. 2 ist in einer schematischen Draufsicht ein in ein elektromagnetisches Feld eingebrachter Schlüssel 1 dargestellt. Der Schlüssel 1 liegt dabei auf einem mobilen Endgerät 9, welches insbesondere ein Smartphone sein kann, auf, wobei das mobile Endgerät eine NFC-Sendeeinrichtung mit einer Spule (in Fig. 2 nicht explizit dargestellt) umfasst, welche ausgebildet ist, in einem Frequenzbereich von 13,56 MHz zu arbeiten. Durch das von der NFC-Sendeeinrichtung des mobilen Endgerätes 9 erzeugte elektromagnetische Wechselfeld wir dabei ein Strom in der auf den genannten Frequenzbereich abgestimmten und nach Art einer Spule ausgebildeten Antenne 7 des Schlüssels 1 induziert. Dabei ist vorteilhafterweise nicht nur ein Austausch von Daten zwischen dem Schlüssel 1 und dem mobilen Endgerät 9 unter Nutzung einer NFC-Kommunikation ermöglicht sondern es kann auch der Akkumulator des Schlüssels (in Fig. 2 nicht explizit dargestellt) geladen werden.

Wird der Schlüssel 1 in das Nahfeld einer NFC-Sendeeinrichtung eingebracht, beispielsweise durch Auflegen auf ein mobiles Endgerät 9, wie in Fig. 2 dargestellt, generiert die Elektronikeinheit des Schlüssels 1 vorteilhafterweise ein Signal, welches an die NFC-Sendeeinrichtung beziehungsweise das mobile Endgerät 9 übertragen wird. Das mobile Endgerät 9 ist dabei ausgebildet, durch Empfang des Signals das Einbringen des Schlüssels 1 in das von der NFC-Sendeeinrichtung des mobilen Endgerätes 9 erzeugte elektromagnetische Feld zu erkennen. Auf dem Display des mobilen Endgerätes 9 (in Fig. 2 nicht explizit dargestellt) wird eine Information wiedergegeben, dass das Einbringen des Schlüssels 1 in das elektromagnetische Feld der NFC-Sendeeinrichtung erkannt wurde. Zudem generiert die NFC-Sendeeinrichtung des mobilen Endgerätes 9 ein elektromagnetisches Feld, wobei die Energie des Feldes von der Antenne 7 des Schlüssels 1 in Verbindung mit einer Ladeinheit des Schlüssels 1 einen Ladestrom umgewandelt wird. Die in einen Ladestrom umgewandelte Energie wird in einem elektrischen Energiespeicher des Schlüssels 1, insbesondere in dem Akkumulator des Schlüssels, gespeichert und ist für eine kontaktlose Betätigung einer Schließvorrichtung eines Kraftfahrzeugs über eine Luftschnittstelle unter Nutzung der seitens der Elektronikeinheit des Schlüssels bereitgestellten Mittel zur kontaktlosen Betätigung einer Schließvorrichtung eines Kraftfahrzeugs des Schlüssels 1 nutzbar.

Die Ladeeinheit des Schlüssels 1 steuert den Ladevorgang des elektrischen Energiespeichers und veranlasst das Senden eines weiteren Signals an die NFC-Sendeeinrichtung beziehungsweise das mobile Endgerät 9, wenn der Energiespeicher des Schlüssels 1 vollständig geladen ist. Unter Nutzung dieses weiteren gesendeten Signals des Schlüssels 1 signalisiert das mobile Endgerät 9 auf dessen Display, dass der Energiespeicher des Schlüssels 1 vollständig geladen ist. Die NFC-Sendeeinrichtung des mobilen Endgerätes 9 wird dann in einen Stand-by-Betrieb versetzt werden, wenn kein Austausch von Daten zwischen dem Schlüssel 1 und dem mobilen Endgerät 9 erfolgen soll.

Die in den Figuren dargestellten und im Zusammenhang mit diesen erläuterten Ausführungsbeispiele dienen der Erläuterung der Erfindung und sind für diese nicht beschränkend.

### Bezugszeichenliste:

- 1: Schlüssel
- 2: Gehäuse
- 3: Elektronikeinheit
- 4: elektrochemischer Energiespeicher
- 5: Mittel zur kontaktlosen Betätigung einer Schließvorrichtung eines Kraftfahrzeugs über eine Luftschnittstelle
- 6: nach wenigstens einem NFC-Standard arbeitendes Kommunikationsmittel
- 7: Spule
- 8: Ladeeinheit
- 9: mobiles Endgerät

## Patentansprüche

1. Schlüssel (1) zur Bedienung einer Schließvorrichtung eines Kraftfahrzeugs, welcher ein Gehäuse (2), eine in dem Gehäuse (2) angeordnete Elektronikeinheit (3) und wenigstens einen elektrochemischen Energiespeicher (4) zur Bereitstellung elektrischer Energie aufweist,
wobei die Elektronikeinheit (3) Mittel (5) zur kontaktlosen Betätigung der Schließvorrichtung über eine Luftschnittstelle unter Nutzung bereitgestellter elektrischer Energie
und
ein nach wenigstens einem NFC-Standard arbeitendes Kommunikationsmittel (6) mit einer Antenne (7) umfasst,
wobei die Antenne (7) derart ausgebildet ist, dass in einem elektromagnetischen Feld einer NFC-Sendeeinrichtung in der Antenne (7) ein Strom erzeugt wird,
**dadurch gekennzeichnet,**
**dass** die Elektronikeinheit (3) ausgebildet ist, den in der Antenne (7) in dem elektromagnetischen Feld erzeugten Strom zur kontaktlosen Betätigung der Schließvorrichtung als bereitgestellte elektrische Energie zu nutzen.

2. Schlüssel (1) nach Anspruch 1, **dadurch gekennzeichnet, dass** die Elektronikeinheit (3) eine Ladeeinheit (8) umfasst, wobei die Antenne (7) elektrisch leitfähig mit der Ladeeinheit (8) verbunden ist und die Antenne (7) in Verbindung mit der Ladeeinheit (8) in einem elektromagnetischen Feld einer NFC-Sendeeinrichtung Energie des elektromagnetischen Feldes in einen Ladestrom umwandelt.

3. Schlüssel (1) nach Anspruch 2, **dadurch gekennzeichnet, dass** die Antenne (7) über wenigstens ein Schaltelement mit der Ladeeinheit (8) elektrisch leitfähig verbunden ist.

4. Schlüssel nach Anspruch 2 oder Anspruch 3, **dadurch gekennzeichnet, dass** die Ladeeinheit (8) elektrisch leitfähig mit wenigstens einem Energiespeicher verbunden ist, wobei der Energiespeicher ausgebildet ist, den in der Antenne erzeugten Strom zu speichern, und wobei die Elektronikeinheit (3) ausgebildet ist, die gespeicherte Energie zur kontaktlosen Betätigung der Schließvorrichtung als bereitgestellte Energie zu nutzen.

5. Schlüssel (1) nach Anspruch 4, **dadurch gekennzeichnet, dass** der Energiespeicher ein Kondensator oder eine Spule ist.

6. Schlüssel (1) nach Anspruch 4, **dadurch gekennzeichnet, dass** der Energiespeicher der wenigstens eine elektrochemische Energiespeicher (4) ist, wobei der wenigstens eine elektrochemische Energiespeicher (4) ein Akkumulator ist.

7. Schlüssel (1) nach einem der Ansprüche 2 bis 6, **dadurch gekennzeichnet, dass** die Ladeeinheit (8) zur Steuerung des Ladevorgangs des Energiespeichers ausgebildet ist.

8. Schlüssel (1) nach einem der Ansprüche 1 bis 7, **dadurch gekennzeichnet, dass** der Schlüssel (1) wenigstens eine Signalisierungseinrichtung aufweist, wobei die wenigstens eine Signalisierungseinrichtung signalisiert, wenn der Schlüssel (1) derart in einem elektromagnetischen Feld ausgerichtet ist, dass eine optimale Nutzung der durch das elektromagnetische Feld bereitgestellten Energie durch die Antenne (7) ermöglicht ist.

9. Schlüssel (1) nach einem der Ansprüche 1 bis 8, **dadurch gekennzeichnet, dass** der Schlüssel (1) wenigstens eine Signalisierungseinrichtung aufweist, wobei die wenigstens eine Signalisierungseinrichtung signalisiert, wenn der in der Antenne (7) in dem elektromagnetischen Feld erzeugte Strom zur zumindest einmaligen kontaktlosen Betätigung der Schließvorrichtung als bereitgestellte elektrische Energie nutzbar ist.
